# EUROPÄISCHE PATENTSCHRIFT

(11) **EP 3 811 835 B1**
(45) Veröffentlichungstag und Bekanntmachung des Hinweises auf die Patenterteilung: **27.09.2023**
(21) Anmeldenummer: 20183938.8
(22) Anmeldetag: 03.07.2020
(51) Int. Cl.: A47K 10/12, A47K 10/10

(54) **BEFESTIGUNGSANORDNUNG FÜR DIE BEFESTIGUNG EINES BADACCESSOIRES AN EINER WAND**
MOUNTING ELEMENT FOR ATTACHING A BATH ACCESSORY TO A WALL
AGENCEMENT DE FIXATION POUR LA FIXATION D'UN ACCESSOIRE DE SALLE DE BAIN SUR UN MUR

(30) Priorität: 23.10.2019 DE 202019105873 U
(43) Veröffentlichungstag der Anmeldung: 28.04.2021
(73) Patentinhaber: Ovibell Pflanzen, Deko und Freizeit GmbH & Co. KG, 45479 Mülheim an der Ruhr (DE)
(72) Erfinder: Heller, Thomas, 46414 Rhede (DE)
(74) Vertreter: Gottschald Patentanwälte Partnerschaft mbB

(56) Entgegenhaltungen:
- EP-A2- 2 628 426
- GB-A- 1 017 671
- US-A- 2 694 813
- US-A- 4 979 713
- US-A1- 2014 306 079

## Beschreibung

Die Erfindung betrifft eine Befestigungsanordnung für die Befestigung eines Badaccessoires an einer Wand gemäß dem Oberbegriff von Anspruch 1 sowie einen Hohlkörper für die Befestigung eines Badaccessoires gemäß dem Oberbegriff von Anspruch 19.

Badaccessoires sind hier ganz allgemein wandhängende Hilfsmittel wie Handtuchhaken, Handtuchhalter, Ring-Handtuchhalter, Seifenschalen, Papierrollenhalter, WC-Bürstenhalter, Wandablagen oder dergleichen für ein Bad oder einen ähnlichen Bereich wie beispielsweise eine Küche.

Die bekannte Befestigungsanordnung (DE 83 10 486 U1), von der die Erfindung ausgeht, dient der Befestigung eines Handtuchhakens an einer Wand. Zu diesem Zweck ist ein an der Wand fixierbares Wandlager vorgesehen, das einen Befestigungsabschnitt und zu beiden Seiten des Befestigungsabschnitts je einen davon ausgehenden Klemmabschnitt aufweist, der jeweils schräg zum Befestigungsabschnitt verläuft. Der Befestigungsabschnitt kommt im montierten Zustand an der Wand zur Anlage und wird durch zwei Schrauben an der Wand fixiert. Über das Wandlager ist an der Wand ein Hohlzylinder, üblicherweise als Rosette bezeichnet, festklemmbar, wobei an dessen von der Wand abgewandtem axialen Ende der Handtuchhaken befestigt ist. Der Hohlzylinder weist an seinem offenen, der Wand zugewandten Ende einen innenseitig umlaufenden Kragen auf, der einen Hinterschnitt für das Wandlager bildet. So ist im montierten Zustand der Kragen zwischen den Klemmabschnitten des Wandlagers und der Wand axial verklemmt. Um eine entsprechende Klemmkraft zu erzeugen, wird eine in radialer Richtung verstellbare Feststellschraube in den Hohlzylinder eingedreht, die mit dem einen der Klemmabschnitte in Kontakt kommt und im Zuge der Montage zum einen dazu führt, dass der Hohlzylinder relativ zum Wandlager radial verlagert wird und dadurch der Hohlzylinder in diesem Umfangsabschnitt über den innenseitigen Kragen zwischen dem zugeordneten Klemmabschnitt und der Wand verklemmt wird, und zum anderen durch das weitere Anziehen der Feststellschraube dazu führt, dass der Umfangsabschnitt des Hohlzylinders mit der Feststellschraube zwischen dem zugeordneten Klemmabschnitt und der Wand verklemmt wird.

Die Fertigung eines Hohlzylinders für diese Art der Wandmontage ist allerdings relativ aufwendig. So muss bei der bekannten Befestigungsanordnung zunächst ein innerer Hohlzylinderkörper mit dem innenseitigen Kragen gefertigt werden, was durch Metall-Formguss erfolgen kann. Es ist auch bekannt, anstelle eines solchen Kragens im Hohlzylinder innenseitige Vorsprünge zu befestigen, die den Hinterschnitt für das Wandlager im montierten Zustand bilden. Für eine ansprechende Optik kann dann noch, wie bei der bekannten Befestigungsanordnung, eine Deckhülse mit einem Dekor auf den inneren Hohlzylinderkörper aufgeschoben werden, wodurch regelmäßig eine Chromoptik oder dergleichen erzeugt wird.

Der Erfindung liegt das Problem zugrunde, die bekannte Befestigungsanordnung derart auszugestalten und weiterzubilden, dass die Herstellung vereinfacht wird.

Das obige Problem wird bei einer Befestigungsanordnung für die Befestigung eines Badaccessoires an einer Wand gemäß dem Oberbegriff von Anspruch 1 durch die Merkmale des kennzeichnenden Teils von Anspruch 1 gelöst.

Wesentlich ist die grundsätzliche Überlegung, einen mittels eines Wandlagers festklemmbaren Hohlkörper, insbesondere Hohlzylinder, vorzusehen, der von einem Drehteil gebildet wird. Das Drehteil weist eine innenseitig und außenseitig drehbearbeitete Hohlkörperwand auf, wobei durch die Drehbearbeitung innenseitig auch ein Inneneinstich hergestellt wird, der als Hinterschnitt für das Wandlager im montierten Zustand dient. Mit einem "Inneneinstich" ist eine innen umlaufende, gedrehte Nut gemeint, deren eine Seitenwand die Funktion des Hinterschnitts hat. Da vorschlagsgemäß der Hohlkörper ein Drehteil ist, lassen sich auf einfache Weise die für die Befestigung an der Wand vorzusehenden Anlageflächen für das Wandlager, nämlich durch Herstellung des besagten Inneneinstichs, erzeugen. Das Erzeugen eines Inneneinstichs durch eine Drehbearbeitung ist auch wenig zeitaufwendig und einfach realisierbar. Ein weiterer Vorteil eines solchen Drehteils ist, dass der Hohlkörper im Zuge seiner Herstellung außenseitig und gegebenenfalls auch frontseitig mit einer ansprechenden, beispielsweise glänzenden, Optik versehen werden kann. Auf eine ein Dekor bereitstellende, separate Deckhülse kann so verzichtet werden.

Im Einzelnen wird vorgeschlagen, dass der Hohlkörper eine um die geometrische Mittelachse umlaufende, radial innen- und außenseitig drehbearbeitete Hohlkörperwand mit einem Inneneinstich aufweist, in den im montierten Zustand mindestens ein Umfangsabschnitt des Wandlagers radial eintaucht.

Der Begriff "axial" bezieht sich auf die Verlaufsrichtung der geometrischen Mittelachse, also im montierten Zustand die Richtung orthogonal zur Wand. Mit "radial" ist entsprechend die Richtung orthogonal zur geometrischen Mittelachse gemeint.

Nach der bevorzugten Ausgestaltung gemäß Anspruch 2 bildet der Inneneinstich eine umlaufende Anlagefläche und/oder Anlagekante zur Anlage des jeweiligen Umfangsabschnitts des Wandlagers im montierten Zustand aus. Die Anlagefläche kann dabei einen schrägen Verlauf, also einen zur axialen und radialen Richtung winkeligen Verlauf haben (Anspruch 3). Eine solche Anlagefläche wird insbesondere von der Seitenwand des Inneneinstichs, also der Nutwand, gebildet. In dem Fall, dass eine Anlagekante zur Anlage des jeweiligen Umfangsabschnitts vorgesehen ist, ist diese zwischen einem axial verlaufenden Abschnitt der radialen Innenoberfläche der Hohlkörperwand und einer dazu winkelig verlaufenden Fläche, bei der es sich ebenfalls um eine Seitenwand des Inneneinstichs handeln kann, ausgebildet (Anspruch 4). Besagte Seitenwand des Inneneinstichs ist dabei immer die im montierten Zustand der Wand am nächsten liegende, also die von der Wand abgewandte, Seitenwand. Die andere Seitenwand des Inneneinstichs wird insbesondere von einem das geschlossene axiale Ende des Hohlkörpers bildenden axialen Endabschnitt gebildet. Der axial verlaufende Abschnitt der radialen Innenoberfläche der Hohlkörperwand ist dabei der Abschnitt, der sich in Richtung von dem offenen axialen Ende, insbesondere ausgehend von dem offenen axialen Ende, des Hohlkörpers aus bis zu dem Inneneinstich erstreckt (Anspruch 5).

Nach der ebenfalls bevorzugten Ausgestaltung gemäß Anspruch 6 ist die radiale Grundfläche des Inneneinstichs - dies ist der Nutgrund der umlaufenden Nut - im montierten Zustand radial von dem jeweiligen Umfangsabschnitt beabstandet. Zusätzlich oder alternativ ist der axiale Endabschnitt des Hohlkörpers, der das geschlossene axiale Ende bildet, im montierten Zustand von dem Umfangsabschnitt beabstandet. Auf diese Weise kann der Hohlkörper spaltfrei oder jedenfalls weitestgehend spaltfrei an der Wand montiert werden.

Anspruch 7 betrifft eine besonders bevorzugte Ausgestaltung, bei der der Hohlkörper relativ zum Wandlager in einer insbesondere axialen ersten Montagerichtung undloder, insbesondere daran anschließend, in einer zur axialen Richtung winkeligen zweiten Montagerichtung führbar ist, um den Hohlkörper zu montieren. Gemäß Anspruch 8 dient die Bewegung in die erste Montagerichtung vorzugsweise zum Aufstecken des Hohlkörpers auf das Wandlager und die Bewegung in die zweite Montagerichtung zum axialen Verklemmen des Hohlkörpers. Der Verlauf einer in diesem Klemmzustand wirkenden Klemmkraft ist in Anspruch 9 definiert.

Anspruch 10 betrifft eine Feststellschraube, mit der der Hohlkörper besonders einfach in den Klemmzustand gebracht werden kann.

In Anspruch 11 ist eine besonders bevorzugte Ausgestaltung der axial verlaufenden Außenoberfläche der Hohlkörperwand des Hohlkörpers angegeben. Diese weist vorzugsweise umlaufende Rillen auf, die durch die Drehbearbeitung auf einfache Weise erzeugt werden können. Die Rillen und/oder Bereiche der Außenoberfläche axial zwischen den Rillen können auch poliert sein.

Die Ansprüche 12 bis 16 betreffen besonders bevorzugte Ausgestaltungen des Wandlagers.

Nach der ebenfalls bevorzugten Ausgestaltung gemäß Anspruch 17 ist das Wandlager und/oder der Hohlkörper jeweils ein einstückiger Körper, insbesondere Metallkörper. "Einstückig" bedeutet, dass das Wandlager bzw. der Hohlkörper jeweils aus einem Stück gefertigt ist, also beispielsweise der Hohlkörper gerade keine Deckhülse mit einem separaten Dekor aufweist.

In Anspruch 18 ist definiert, dass der Hohlkörper auch mit dem Badaccessoire einstückig ausgestaltet sein kann. Grundsätzlich ist es aber auch denkbar, dass das Badaccessoire als separates Bauteil am Hohlkörper fixiert ist. Dies kann beispielsweise mittels einer Schraubverbindung zwischen dem Badaccessoire und dem Hohlkörper erfolgen.

Nach einer weiteren Lehre gemäß Anspruch 19, der eigenständige Bedeutung zukommt, wird ein Hohlkörper, insbesondere Hohlzylinder, für die Befestigung eines Badaccessoires an einer Wand, insbesondere unter Verwendung einer Befestigungsanordnung nach einem der Ansprüche 1 bis 18, beansprucht. Auf alle Ausführungen zu der vorschlagsgemäßen Befestigungsanordnung darf insoweit verwiesen werden.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße Befestigungsanordnung mit einem vorschlagsgemäßen Hohlkörper im unmontierten Zustand,
- Fig. 2: die Befestigungsanordnung gemäß Fig. 1 a) im teilmontierten Zustand und b) im weiteren Verlauf der Montage bis zum endmontierten Zustand und
- Fig. 3: eine axiale Innenansicht der Befestigungsanordnung gemäß Fig. 1 im endmontierten Zustand.

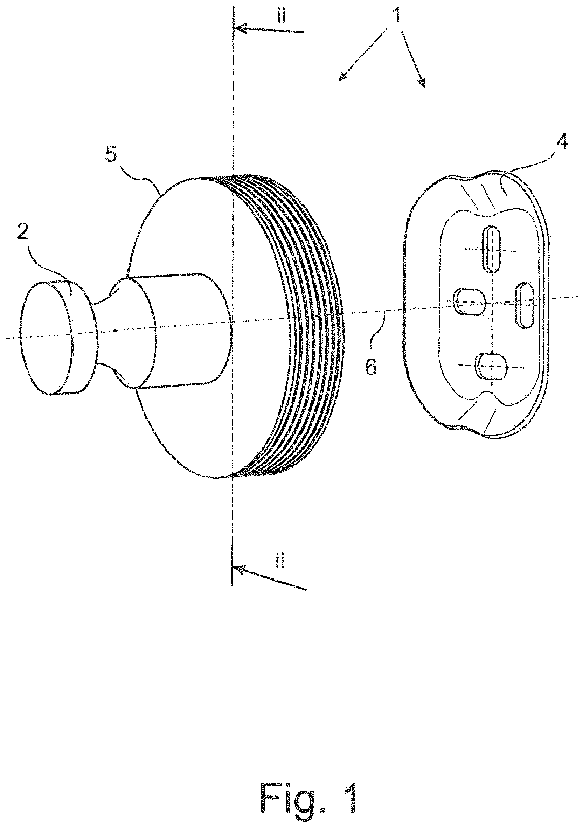

Die vorschlagsgemäße Befestigungsanordnung 1 dient zur Befestigung eines Badaccessoires 2 an einer Wand 3. Auf das weite Verständnis des Begriffs "Badaccessoire" des einleitenden Teils der Beschreibung darf verwiesen werden. Lediglich beispielhaft ist in Fig. 1 ein Handtuchhaken als Badaccessoire dargestellt. Alle diesbezüglichen Ausführungen gelten für alle anderen Arten von Badaccessoires entsprechend. Die Wand 3 kann dabei eine Badezimmerwand, Möbelwand oder dergleichen sein.

Wie Fig. 1 zeigt, weist die Befestigungsanordnung 1 ein an der Wand 3 fixierbares Wandlager 4 auf. Zur Fixierung ist das Wandlager 4 hier und vorzugsweise unmittelbar an die Wand 3 anschraubbar, alternativ auch anklebbar. Das Wandlager 4 ist hier als einstückiger Körper, insbesondere Metallkörper, ausgestaltet. Vorzugsweise ist dieser ein Blechumformteil. In einem radialen Schnitt kann das Wandlager einen runde Querschnitt oder wie hier einen balligen Querschnitt, insbesondere mit mindestens einer seitlichen Einbuchtung, haben.

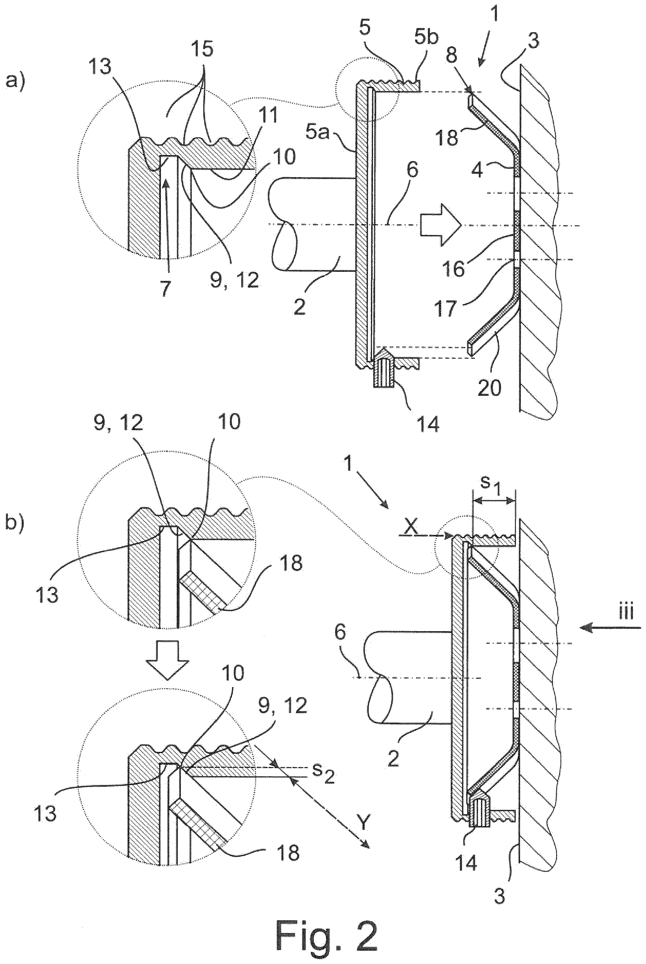

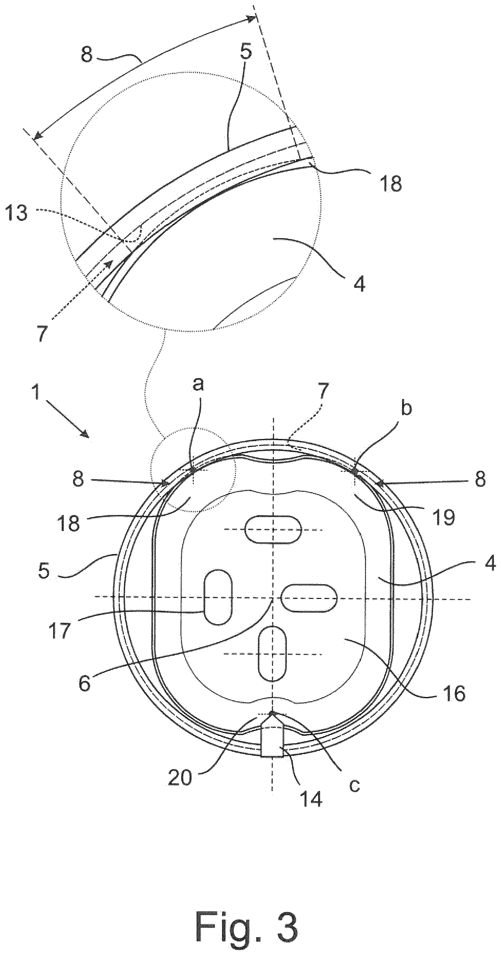

Mittels des Wandlagers 4 ist ein als Rosette bezeichneter Hohlkörper 5, hier ein axial einseitig geschlossener Hohlkörper 5, insbesondere in Form eines Hohlzylinders, festklemmbar. Dieser ist hier ebenfalls als einstückiger Körper, insbesondere Metallkörper, ausgestaltet. Der Hohlkörper bzw. Hohlzylinder 5 weist eine geometrische Mittelachse 6 auf, um die dieser hier und vorzugsweise rotationssymmetrisch ausgebildet ist. Den Fig. 2 und 3 ist zu entnehmen, dass im montierten Zustand der Hohlkörper bzw. Hohlzylinder 5 das Wandlager 4 radial, insbesondere vollständig, umgibt.

Es sei hervorgehoben, dass anstelle eines Hohlzylinders der Hohlkörper 5 auch von einem Hohlkegelstumpf oder einem anderen insbesondere rotationssymmetrischen Hohlkörper gebildet sein kann. Alle diesbezüglichen Ausführungen gelten für alle anderen Arten von Hohlkörpern entsprechend.

Im Zuge der Montage unter Anwendung der vorschlagsgemäßen Befestigungsanordnung 1 wird zunächst das Wandlager 4 an der Wand 3 fixiert, insbesondere angeschraubt oder angeklebt. Anschließend wird der Hohlzylinder 5, das Wandlager 4 radial umgebend, auf das Wandlager 4 aufgesetzt und schließlich, vorzugsweise ebenfalls durch Verschrauben, festgeklemmt, sodass der Hohlzylinder 5 in axialer Richtung an der Wand 3 zur Anlage kommt und formschlüssig und kraftschlüssig gehalten wird.

Bevor der Hohlzylinder 5 auf das Wandlager 4 aufgesetzt und verklemmt wird, ist dieser vorzugsweise bereits, insbesondere an seinem sein geschlossenes axiales Ende bildenden axialen Endabschnitt 5a, mit dem Badaccessoire 2 versehen. Dabei kann der Hohlzylinder 5, insbesondere der axiale Endabschnitt 5a, mit dem Badaccessoire 2 einstückig ausgestaltet sein. Alternativ ist es auch denkbar, dass das Badaccessoire 2 am Hohlzylinder 5, insbesondere an dem axialen Endabschnitt 5a, formschlüssig, kraftschlüssig und/oder stoffschlüssig fixiert ist.

Wesentlich ist nun, dass der Hohlkörper bzw. Hohlzylinder 5 eine um die geometrische Mittelachse 6 umlaufende, radial innen- und außenseitig drehbearbeitete Hohlkörperwand 5b mit einem Inneneinstich 7 in Form einer innen umlaufenden, gedrehten Nut aufweist, in den im montierten Zustand mindestens ein Umfangsabschnitt 8 des Wandlagers 4 radial eintaucht. Der Inneneinstich 7 bildet, wie in Fig. 2b) in der Detailansicht unten links dargestellt ist, einen Hinterschnitt aus, über den hier der Hohlzylinder 5 axial formschlüssig und insbesondere im verklemmten Zustand kraftschlüssig am Wandlager 4 festgelegt ist.

Der Inneneinstich 7 hat hier und vorzugsweise eine Tiefe in radialer Richtung in einem Bereich von 0,5 bis 2,5 mm, weiter vorzugsweise in einem Bereich von 1,0 bis 2,0 mm, weiter vorzugsweise in einem Bereich von 1,2 bis 1,6 mm. Das Verhältnis der Dicke der Hohlkörperwand bzw. Zylinderwand 5b im Hohlkörperwandabschnitt bzw. Zylinderwandabschnitt axial neben dem Inneneinstich 7 zur Tiefe des Inneneinstichs 7 liegt hier und vorzugsweise in einem Bereich von 1,5 bis 5,0, weiter vorzugsweise in einem Bereich von 1,5 bis 3,0, weiter vorzugsweise in einem Bereich von 1,8 bis 2,0.

Der mindestens eine Umfangsabschnitt 8 des Wandlagers 4 liegt im montierten Zustand hier und vorzugsweise jeweils an einer von dem Inneneinstich 7 ausgebildeten umlaufenden Anlagefläche 9 und/oder Anlagekante 10 an.

Die von dem Inneneinstich 7 ausgebildete Anlagefläche 9 hat hier und vorzugsweise einen schrägen Verlauf. Wie in Fig. 2a) in der Detailansicht zu erkennen ist, wird diese Anlagefläche 9 von einer Seitenwand des Inneneinstichs 7 gebildet, nämlich von der Seitenwand, die im montierten Zustand von der Wand 3 abgewandt ist.

Wie zuvor beschrieben, kann zur Anlage des jeweiligen Umfangsabschnitts 8 auch eine Anlagekante 10 vorgesehen sein. In diesem Fall handelt es sich bei der Anlagekante 10 um eine Kante, insbesondere eine scharfe oder abgerundete Kante, die zwischen einem axial verlaufenden Abschnitt 11 der radialen Innenoberfläche der Hohlkörperwand bzw. Zylinderwand 5b und einer dazu winkelig, insbesondere schräg, verlaufenden von dem Inneneinstich 7 ausgebildeten Fläche 12 ausgebildet ist. Diese Fläche 12 wird ebenfalls von einer Seitenwand des Inneneinstichs 7, die insbesondere im montierten Zustand von der Wand 3 abgewandt ist, gebildet. Hier handelt es sich bei der Fläche 12 um die Anlagefläche 9.

Der axial verlaufende Innenoberflächenabschnitt 11 erstreckt sich hier und vorzugsweise in Richtung von und ausgehend von dem offenen axialen Ende des Hohlzylinders 5 axial bis zu dem Inneneinstich 7, hier bis zu der Anlagefläche 9 und/oder Anlagekante 10. Der axial verlaufende Abschnitt 11 der radialen Innenoberfläche der Hohlkörperwand bzw. Zylinderwand 5b weist hier und vorzugsweise eine ebene Oberfläche auf.

Wie in Fig. 2a) in der Detailansicht zu erkennen ist, weist der Inneneinstich 7 auch eine Grundfläche 13 auf. Im montierten Zustand ist diese Grundfläche 13 radial von dem mindestens einen Umfangsabschnitt 8 beabstandet. Zusätzlich oder alternativ kann, wie hier, vorgesehen sein, dass die axiale Innenoberfläche des das axiale Ende des Hohlzylinders 5 bildenden axialen Endabschnitts 5a axial von dem mindestens einen Umfangsabschnitt 8 beabstandet ist. Es bleibt also im montierten Zustand vorzugsweise ein axialer und ein radialer Spalt zwischen Wandlager 4 und Hohlzylinder 5, was eine optimale Verklemmung gewährleistet und eine Spaltbildung im montierten Zustand zwischen Hohlzylinder 5 und Wand 3 verhindern kann.

Die Form des Wandlagers 4, insbesondere des mindestens einen Umfangsabschnitts 8, und die Form des Hohlzylinders 5, insbesondere der Verlauf der radialen Innenoberfläche der Hohlkörperwand bzw. Zylinderwand 5b, sind hier und vorzugsweise derart aufeinander abgestimmt, das heißt, Wandlager 4 und Hohlzylinder 5 wirken derart miteinander zusammen, dass im Zuge der Montage der Hohlzylinder 5 relativ zum Wandlager 4 in einer ersten Montagerichtung X, insbesondere in axialer Richtung, und/oder, insbesondere daran anschließend, in einer zur axialen Richtung winkeligen, insbesondere schrägen, zweiten Montagerichtung Y führbar ist. Die zweite Montagerichtung Y verläuft hier und vorzugsweise winkelig, insbesondere schräg, zur ersten Montagerichtung X. Eine entsprechende Montagebewegung in der ersten Montagerichtung X erfolgt über einen Weg s₁ und die Montagebewegung in der zweiten Montagerichtung Y über einen Weg s₂.

Weiter ist es hier und vorzugsweise so, dass im Zuge der Montage der Hohlzylinder 5 in der ersten Montagerichtung X, insbesondere in der axialen Richtung, auf das Wandlager 4 wie in Fig. 2a) gezeigt, aufsteckbar und dadurch in einen Aufsteckzustand bringbar ist. Dieser Aufsteckzustand, in welchem der Hohlzylinder 5 mit dem Wandlager 4 lose verbunden ist, ist in Fig. 2b) in der rechten Darstellung und in der oberen Detailansicht gezeigt. Zusätzlich oder alternativ kann, wie hier, insbesondere anschließend an das Aufstecken des Hohlzylinders 5 auf das Wandlager 4, der Hohlzylinder 5 relativ zum Wandlager 4 in der zur axialen Richtung winkeligen zweiten Montagerichtung Y bewegt und dadurch in einen Klemmzustand gebracht werden, wie in einer Zusammenschau der beiden Detailansichten von Fig. 2b) erkennbar ist. Dieser Klemmzustand, in welchem der Hohlzylinder 5 zwischen dem Wandlager 4 und der Wand 3 axial verklemmt ist, ist in Fig. 2b) in der unteren Detailansicht dargestellt. In dem Klemmzustand des Hohlzylinders 5 befindet sich die Befestigungsanordnung 1 dann im endmontierten Zustand.

In dem in Fig. 2b) in der unteren Detailansicht gezeigten Klemmzustand, in welchem der Hohlzylinder 5 zwischen dem Wandlager 4 und der Wand 3 axial verklemmt ist, wird eine axiale Klemmkraft von dem mindestens einen Umfangsabschnitt 8 auf den Hohlzylinder 5, insbesondere den axialen Hohlkörperwandabschnitt bzw. Zylinderwandabschnitt zwischen dem Inneneinstich 7 und dem axial offenen Ende des Hohlzylinders 5, ausgeübt. Durch diese Klemmkraft wird der Hohlzylinder 5 so festgehalten, dass ein entsprechendes Badaccessoire 2 auch mit den üblichen anwendungsspezifischen Kräften, beispielsweise der von einem Handtuch resultierenden Gewichtskraft, beaufschlagt werden kann, ohne dabei einen Spalt zwischen Hohlzylinder 5 und Wand 3 zu erzeugen.

In der Hohlkörperwand 5b ist hier und vorzugsweise eine in radialer Richtung verstellbare Feststellschraube 14, hier in Form einer Madenschraube, angeordnet, durch deren Verstellung radial nach innen der Hohlzylinder 5 von dem Aufsteckzustand (obere Detailansicht von Fig. 2b)) in den Klemmzustand (untere Detailansicht von Fig. 2b)) bringbar ist. So kommt beim Festziehen der Feststellschraube 14 diese mit dem Wandlager 4, hier mit einer seitlichen Einbuchtung im Wandlager 4, in Kontakt und bewirkt eine Verlagerung des Hohlzylinders 5 relativ zum Wandlager 4 in die zweite Montagerichtung Y, wodurch der Hohlkörperwandabschnitt bzw. Zylinderwandabschnitt, der sich von dem offenen axialen Ende des Hohlzylinders 5 axial bis zu dem Inneneinstich 7 erstreckt, zwischen Wand 3 und Wandlager 4 axial verklemmt wird.

Die Hohlkörperwand bzw. Zylinderwand 5b des Hohlzylinders 5 weist ferner eine axial verlaufende Außenoberfläche auf, die sich in Richtung von und insbesondere ausgehend von dem offenen axialen Ende des Hohlzylinders 5 axial über den Inneneinstich 7 hinaus erstreckt, also über die axiale Stelle hinaus, an der innenseitig an der Hohlkörperwand 6b der Inneneinstich 7 vorgesehen ist. Hier und vorzugsweise weist die axial verlaufende Außenoberfläche der Hohlkörperwand bzw. Zylinderwand 5b eine mit Rillen 15 versehene Oberfläche auf. Die Rillen 15 sind dabei jeweils in einer zur geometrischen Mittelachse 6 orthogonalen Ebene umlaufend angeordnet. Die Rillen 15 werden hier ebenfalls durch die Drehbearbeitung des Hohlzylinders erzeugt. Besonders bevorzugt sind die Rillen und/oder die axialen Abschnitte zwischen den Rillen noch nachbearbeitet, insbesondere poliert.

Im Weiteren wird nun das Wandlager 4 näher beschrieben. Das Wandlager 4 weist hier und vorzugsweise einen Befestigungsabschnitt 16 auf, der im montierten Zustand an der Wand 3 zur Anlage kommt. Der Befestigungsabschnitt 16 weist hier und vorzugsweise zum Fixieren an der Wand 3 ein oder mehrere Löcher 17 zum Durchführen eines Befestigungselements, insbesondere einer Schraube, auf. Ein oder mehrere Löcher 17 in dem Befestigungsabschnitt 16 sind hier und vorzugsweise Langlöcher, sodass das Wandlager 4 an der Wand 3 optimal ausgerichtet werden kann. Der Befestigungsabschnitt 16 ist hier eben ausgestaltet und verläuft parallel zur Wand.

Ausgehend von dem Befestigungsabschnitt 16 des Wandlagers 4 erstrecken sich ein oder mehrere, hier zwei, Klemmabschnitte 18, 19, die jeweils einen der im montierten Zustand in den Inneneinstich 7 eintauchenden Umfangsabschnitte 8 des Wandlagers 4 ausbilden. Der jeweilige Klemmabschnitt 18, 19 verläuft hier winkelig, insbesondere schräg, zum Befestigungsabschnitt 16. Die Klemmabschnitte 18, 19 sowie der im weiteren noch beschrieben Klemmabschnitt 20 sind Bestandteil einer umlaufenden schrägen Wand des Wandlagers 4, die mit dem Befestigungsabschnitt 16 verbunden und insbesondere einstückig ausgestaltet ist, so dass das Wandlager 4 dadurch hier und vorzugsweise im Wesentlichen schalenförmig ausgestaltet ist.

Ausgehend vom Befestigungsabschnitt 16 des Wandlagers 4 erstreckt sich hier und vorzugsweise noch ein weiterer Klemmabschnitt 20, der im Zuge der Montage mit der Feststellschraube 14 in Kontakt kommt und bei der Verstellung der Feststellschraube 14 radial nach innen eine radiale Kraft über die Feststellschraube 14 auf die Hohlkörperwand 5b ausübt. Durch diese radiale Kraft wird dann der Hohlzylinder 5 wie zuvor beschrieben relativ zum Wandlager 4 in die zweite Montagerichtung Y verlagert. Zusätzlich oder alternativ kann, wie auch in Fig. 2 zu erkennen ist, der weitere Klemmabschnitt 20 im Klemmzustand über die Feststellschraube 14 eine axiale Klemmkraft auf den Hohlzylinder 5, insbesondere den axialen Hohlkörperwandabschnitt zwischen dem Inneneinstich 7 und dem axialen offenen Ende des Hohlzylinders 5, ausüben. Hier und vorzugsweise verläuft auch der weitere Klemmabschnitt 20 winkelig, insbesondere schräg, zum Befestigungsabschnitt 16.

Wie Fig. 3 in der unteren Ansicht zeigt, sind hier und vorzugsweise bei der vorschlagsgemäßen Befestigungsanordnung 1 mindestens zwei, hier genau zwei, Umfangsabschnitte 8 des Wandlagers 4 vorgesehen, die im montierten Zustand in den Inneneinstich 7 eintauchen. Es ergibt sich hier eine Konstruktion, bei der der Hohlzylinder 5 im montierten Zustand über drei Stellen a, b, c form- und kraftschlüssig gehalten wird, nämlich zum einen an den beiden Umfangsabschnitten 8 bzw. den beiden Klemmabschnitten 18, 19 und zum anderen an der Feststellschraube 14 bzw. dem Klemmabschnitt 20.

Nach einer weiteren Lehre, der eigenständige Bedeutung zukommt, wird ein Hohlkörper 5, insbesondere Hohlzylinder, für die Befestigung eines Badaccessoire 2 an einer Wand 3 mittels eines Wandlagers 4 beansprucht. Die Befestigung erfolgt insbesondere unter Anwendung der vorschlagsgemäßen Befestigungsanordnung 1. Auf alle Ausführungen zu der vorschlagsgemäßen Befestigungsanordnung 1 darf insoweit verwiesen werden.

## Patentansprüche

1. Befestigungsanordnung für die Befestigung eines Badaccessoires (2) an einer Wand (3), wobei die Befestigungsanordnung (1) ein Wandlager (4) und einen mittels des Wandlagers (4) festklemmbaren, insbesondere axial einseitig geschlossenen, Hohlkörper (5), insbesondere Hohlzylinder, mit einer geometrischen Mittelachse (6) aufweist, der im montierten Zustand das Wandlager (4) radial umgibt,
**dadurch gekennzeichnet,**
**dass** der Hohlkörper (5) eine um die geometrische Mittelachse (6) umlaufende, radial innen- und außenseitig drehbearbeitete Hohlkörperwand (5b) mit einem Inneneinstich (7) aufweist, in den im montierten Zustand mindestens ein Umfangsabschnitt (8) des Wandlagers (4) radial eintaucht.

2. Befestigungsanordnung nach Anspruch 1, **dadurch gekennzeichnet, dass** der mindestens eine Umfangsabschnitt (8) des Wandlagers (4) im montierten Zustand jeweils an einer von dem Inneneinstich (7) ausgebildeten umlaufenden Anlagefläche (9) und/oder Anlagekante (10) anliegt.

3. Befestigungsanordnung nach Anspruch 1 oder 2, **dadurch gekennzeichnet, dass** die von dem Inneneinstich (7) ausgebildete umlaufende Anlagefläche (9) für den mindestens einen Umfangsabschnitt (8) des Wandlagers (4) einen schrägen Verlauf hat, vorzugsweise, dass die Anlagefläche (9) von einer Seitenwand des Inneneinstichs (7) gebildet wird.

4. Befestigungsanordnung nach einem der vorhergehenden Ansprüche, **dadurch gekennzeichnet, dass** die von dem Inneneinstich (7) ausgebildete umlaufende Anlagekante (10) eine Kante, insbesondere eine scharfe oder abgerundete Kante, zwischen einem axial verlaufenden Abschnitt (11) der radialen Innenoberfläche der Hohlkörperwand (5b) und einer dazu winkelig, insbesondere schräg, verlaufenden, von dem Inneneinstich (7) ausgebildeten umlaufenden Fläche (12) ist, vorzugsweise, dass die von dem Inneneinstich (7) ausgebildete umlaufende Fläche (12) von einer Seitenwand des Inneneinstichs (7) gebildet wird.

5. Befestigungsanordnung nach einem der vorhergehenden Ansprüche, **dadurch gekennzeichnet, dass** sich ein axial verlaufender Abschnitt (11) der radialen Innenoberfläche der Hohlkörperwand (5b) in Richtung von dem offenen axialen Ende des Hohlkörpers (5) axial bis zu dem Inneneinstich (7), insbesondere bis zu der Anlagefläche (9) und/oder Anlagekante (10), erstreckt, vorzugsweise, dass der axial verlaufende Abschnitt (11) der radialen Innenoberfläche der Hohlkörperwand (5b) eine ebene Oberfläche aufweist.

6. Befestigungsanordnung nach einem der vorhergehenden Ansprüche, **dadurch gekennzeichnet, dass** der Inneneinstich (7) eine radiale Grundfläche (13) aufweist und die Grundfläche (13) im montierten Zustand radial von dem mindestens einen Umfangsabschnitt (8) des Wandlagers (4) beabstandet ist, und/oder, dass die axiale Innenoberfläche des das geschlossene axiale Ende des Hohlkörpers (5) bildenden axialen Endabschnitts (5a) des Hohlkörpers (5) im montierten Zustand axial von dem mindestens einen Umfangsabschnitt (8) des Wandlagers (4) beabstandet ist.

7. Befestigungsanordnung nach einem der vorhergehenden Ansprüche, **dadurch gekennzeichnet, dass** die Form des Wandlagers (4), insbesondere des mindestens einen Umfangsabschnitts (8), und die Form des Hohlkörpers (5), insbesondere der Verlauf der radialen Innenoberfläche der Hohlkörperwand (5b), derart aufeinander abgestimmt sind, dass im Zuge der Montage der Hohlkörper (5) relativ zum Wandlager (4) in einer ersten Montagerichtung (X), insbesondere in axialer Richtung, und/oder in einer zur axialen Richtung winkeligen, insbesondere schrägen, zweiten Montagerichtung (Y) führbar ist.

8. Befestigungsanordnung nach einem der vorhergehenden Ansprüche, **dadurch gekennzeichnet, dass** die Form des Wandlagers (4), insbesondere des mindestens einen Umfangsabschnitts (8), und die Form des Hohlkörpers (5), insbesondere der Verlauf der radialen Innenoberfläche der Hohlkörperwand (5b), derart aufeinander abgestimmt sind, dass im Zuge der Montage der Hohlkörper (5) in der ersten Montagerichtung (X), insbesondere in der axialen Richtung, auf das Wandlager (4) aufsteckbar und dadurch in einen Aufsteckzustand bringbar ist, in welchem der Hohlkörper (5) mit dem Wandlager (4) lose verbunden ist, undloder, dass im Zuge der Montage der Hohlkörper (5) relativ zum Wandlager (4) in der zur axialen Richtung winkeligen, insbesondere schrägen, zweiten Montagerichtung (Y) bewegbar und dadurch in einen Klemmzustand bringbar ist, in welchem der Hohlkörper (5) zwischen dem Wandlager (4) und der Wand axial verklemmt ist.

9. Befestigungsanordnung nach einem der vorhergehenden Ansprüche, **dadurch gekennzeichnet, dass** im Klemmzustand, in welchem der Hohlkörper (5) zwischen dem Wandlager (4) und der Wand (3) axial verklemmt ist, eine axiale Klemmkraft von dem mindestens einen Umfangsabschnitt (8) auf den Hohlkörper (5), insbesondere den axialen Hohlkörperwandabschnitt zwischen dem Inneneinstich (7) und dem axialen offenen Ende des Hohlkörpers (5), ausgeübt wird.

10. Befestigungsanordnung nach einem der vorhergehenden Ansprüche, **dadurch gekennzeichnet, dass** in der Hohlkörperwand (5b) eine in radialer Richtung verstellbare Feststellschraube (14) angeordnet ist, durch deren Verstellung radial nach innen der Hohlkörper (5) von dem Aufsteckzustand in den Klemmzustand bringbar ist.

11. Befestigungsanordnung nach einem der vorhergehenden Ansprüche, **dadurch gekennzeichnet, dass** sich die axial verlaufende Außenoberfläche der Hohlkörperwand (5b) in Richtung von dem offenen axialen Ende des Hohlkörpers (5) axial über den Inneneinstich (7) hinaus erstreckt, vorzugsweise, dass die axial verlaufende Außenoberfläche der Hohlkörperwand (5b) eine mit Rillen (15) versehene Oberfläche aufweist, weiter vorzugsweise, dass die Rillen (15) jeweils in einer zur geometrischen Mittelachse (6) orthogonalen Ebene umlaufen.

12. Befestigungsanordnung nach einem der vorhergehenden Ansprüche, **dadurch gekennzeichnet, dass** das Wand lager (4) einen Befestigungsabschnitt (16) aufweist, der im montierten Zustand an der Wand (3) zur Anlage kommt, vorzugsweise, dass der Befestigungsabschnitt (16) ein oder mehrere Löcher (17) zum Durchführen eines Befestigungselements, insbesondere einer Schraube, aufweist, weiter vorzugsweise, dass ein oder mehrere Löcher (17) in dem Befestigungsabschnitt (16) Langlöcher sind.

13. Befestigungsanordnung nach einem der vorhergehenden Ansprüche, **dadurch gekennzeichnet, dass** sich ausgehend vom Befestigungsabschnitt (16) des Wandlagers (4) mindestens ein Klemmabschnitt (18, 19) erstreckt, der jeweils den oder einen der im montierten Zustand in den Inneneinstich (7) eintauchenden Umfangsabschnitte (8) des Wandlagers (4) ausbildet, vorzugsweise, dass der jeweilige Klemmabschnitt (18, 19) winkelig, insbesondere schräg, zum Befestigungsabschnitt (16) verläuft.

14. Befestigungsanordnung nach einem der vorhergehenden Ansprüche, **dadurch gekennzeichnet, dass** sich ausgehend vom Befestigungsabschnitt (16) des Wandlagers (4) ein weiterer Klemmabschnitt (20) erstreckt, der im Zuge der Montage mit der Feststellschraube (14) in Kontakt kommt und bei der Verstellung der Feststellschraube (14) radial nach innen eine radiale Kraft über die Feststellschraube (14) auf die Hohlkörperwand (5b) ausübt und/oder der im Klemmzustand, in welchem der Hohlkörper (5) zwischen dem Wandlager (4) und der Wand (3) axial verklemmt ist, über die Feststellschraube (14) eine axiale Klemmkraft auf den Hohlkörper (5), insbesondere den axialen Hohlkörperwandabschnitt zwischen dem Inneneinstich (7) und dem axialen offenen Ende des Hohlkörpers (5), ausübt, vorzugsweise, dass der weitere Klemmabschnitt (20) winkelig, insbesondere schräg, zum Befestigungsabschnitt (16) verläuft.

15. Befestigungsanordnung nach einem der vorhergehenden Ansprüche, **dadurch gekennzeichnet, dass** das Wandlager (4) im Wesentlichen schalenförmig ausgestaltet ist.

16. Befestigungsanordnung nach einem der vorhergehenden Ansprüche, **dadurch gekennzeichnet, dass** mindestens zwei, vorzugsweise genau zwei, Umfangsabschnitte (8) des Wandlagers (4) vorgesehen sind, die im montierten Zustand in den Inneneinstich (7) eintauchen, undloder, dass der Hohlkörper (5) im montierten Zustand über drei Stellen (a, b, c) form- und kraftschlüssig gehalten wird.

17. Befestigungsanordnung nach einem der vorhergehenden Ansprüche, **dadurch gekennzeichnet, dass** das Wandlager (4) und/oder der Hohlkörper (5) jeweils ein einstückiger Körper, insbesondere Metallkörper, ist.

18. Befestigungsanordnung nach einem der vorhergehenden Ansprüche, **dadurch gekennzeichnet, dass** der Hohlkörper (5), insbesondere der sein geschlossenes axiales Ende bildende axiale Endabschnitt (5a) des Hohlkörpers (5), mit dem Badaccessoire (2) einstückig ausgestaltet ist oder das Badaccessoire (2) am Hohlkörper (5), insbesondere an dem sein geschlossenes axiales Ende bildenden axialen Endabschnitt (5a) des Hohlkörpers (5), formschlüssig, kraftschlüssig und/oder stoffschlüssig fixiert ist.

19. Hohlkörper, insbesondere Hohlzylinder, für die Befestigung eines Badaccessoires (2) an einer Wand (3) mittels eines Wandlagers (4), insbesondere unter Anwendung einer Befestigungsanordnung (1) nach einem der vorhergehenden Ansprüche, wobei der Hohlkörper (5) eine geometrische Mittelachse (6) aufweist und insbesondere axial einseitig geschlossen ist,
**dadurch gekennzeichnet,**
**dass** der Hohlkörper (5) eine um die geometrische Mittelachse (6) umlaufende, radial innen- und außenseitig drehbearbeitete Hohlkörperwand (5b) mit einem Inneneinstich (7) aufweist, in den im montierten Zustand mindestens ein Umfangsabschnitt (8) des Wandlagers (4) radial eintauchen kann.

## Claims

1. Fastening arrangement for fastening a bathroom accessory (2) to a wall (3), wherein the fastening arrangement (1) has a wall bearing (4) and a hollow body (5), in particular a hollow cylinder, which can be firmly clamped by means of the wall bearing (4), is in particular axially closed on one side, has a geometric centre axis (6), and, in the mounted state, radially surrounds the wall bearing (4),
**characterized**
**in that** the hollow body (5) has a hollow body wall (5b), which encircles the geometric centre axis (6), is radially machined by turning on the inside and outside, and has an internal recess (7) into which, in the mounted state, at least one peripheral portion (8) of the wall bearing (4) radially penetrates.

2. Fastening arrangement according to Claim 1, **characterized in that** the at least one peripheral portion (8) of the wall bearing (4), in the mounted state, in each case bears against an encircling bearing surface (9) and/or bearing edge (10), which is formed by the internal recess (7).

3. Fastening arrangement according to Claim 1 or 2, **characterized in that** the encircling bearing surface (9), which is formed by the internal recess (7), has an oblique profile for the at least one peripheral portion (8) of the wall bearing (4), preferably **in that** the bearing surface (9) is formed by a side wall of the internal recess (7).

4. Fastening arrangement according to any of the preceding claims, **characterized in that** the encircling bearing edge (10), which is formed by the internal recess (7), is an edge, in particular a sharp or rounded edge, between an axially running portion (11) of the radial internal surface of the hollow body wall (5b) and an encircling surface (12), which runs at an angle, in particular obliquely, with respect to said hollow body wall and is formed by the internal recess (7), preferably in that the encircling surface (12), which is formed by the internal recess (7), is formed by a side wall of the internal recess (7).

5. Fastening arrangement according to any of the preceding claims, **characterized in that** an axially running portion (11) of the radial internal surface of the hollow body wall (5b) extends axially in the direction of the open axial end of the hollow body (5) as far as the internal recess (7), in particular as far as the bearing surface (9) and/or bearing edge (10), preferably **in that** the axially running portion (11) of the radial internal surface of the hollow body wall (5b) has a planar surface.

6. Fastening arrangement according to any of the preceding claims, **characterized in that** the internal recess (7) has a radial base surface (13) and the base surface (13) is, in the mounted state, radially spaced apart from the at least one peripheral portion (8) of the wall bearing (4), and/or **in that** the axial internal surface of the axial end portion (5a) of the hollow body (5), said axial end portion forming the closed axial end of the hollow body (5), is, in the mounted state, axially spaced apart from the at least one peripheral portion (8) of the wall bearing (4).

7. Fastening arrangement according to any of the preceding claims, **characterized in that** the shape of the wall bearing (4), in particular of the at least one peripheral portion (8), and the shape of the hollow body (5), in particular the profile of the radial internal surface of the hollow body wall (5b), complement one another in such a manner that, during mounting, the hollow body (5) can be guided relative to the wall bearing (4) in a first mounting direction (X), in particular in an axial direction, and/or in a second mounting direction (Y), which is at an angle, in particular is oblique, with respect to the axial direction.

8. Fastening arrangement according to any of the preceding claims, **characterized in that** the shape of the wall bearing (4), in particular of the at least one peripheral portion (8), and the shape of the hollow body (5), in particular the profile of the radial internal surface of the hollow body wall (5b), complement one another in such a manner that, during mounting, the hollow body (5) can be plugged into the wall bearing (4) in the first mounting direction (X), in particular in the axial direction, and as a result can be brought into a plugged-in state in which the hollow body (5) is loosely connected to the wall bearing (4), and/or **in that**, during mounting, the hollow body (5) can be moved relative to the wall bearing (4) in the second mounting direction (Y), which is at an angle, in particular is oblique, with respect to the axial direction, and as a result can be brought into a clamped state in which the hollow body (5) is axially clamped between the wall bearing (4) and the wall.

9. Fastening arrangement according to any of the preceding claims, **characterized in that**, in the clamped state, in which the hollow body (5) is axially clamped between the wall bearing (4) and the wall (3), an axial clamping force is exerted by the at least one peripheral portion (8) on the hollow body (5), in particular on the axial hollow body wall portion between the internal recess (7) and the axial open end of the hollow body (5).

10. Fastening arrangement according to any of the preceding claims, **characterized in that** a fixing screw (14), which can be adjusted in a radial direction, is arranged in the hollow body wall (5b), it being possible to bring the hollow body (5) from the plugged-in state to the clamped state by adjusting said fixing screw radially inwards.

11. Fastening arrangement according to any of the preceding claims, **characterized in that** the axially running external surface of the hollow body wall (5b) extends axially in the direction of the open axial end of the hollow body (5) beyond the internal recess (7), preferably **in that** the axially running external surface of the hollow body wall (5b) has a surface provided with grooves (15), further preferably **in that** the grooves (15) each encircle within a plane orthogonal to the geometric centre axis (6).

12. Fastening arrangement according to any of the preceding claims, **characterized in that** the wall bearing (4) has a fastening portion (16), which, in the mounted state, comes to bear against the wall (3), preferably **in that** the fastening portion (16) has one or more holes (17) through which a fastening element, in particular a screw, passes, further preferably **in that** one or more holes (17) in the fastening portion (16) are slots.

13. Fastening arrangement according to any of the preceding claims, **characterized in that** at least one clamping portion (18, 19) extends from the fastening portion (16) of the wall bearing (4), said clamping portion in each case forming the, or one of the, peripheral portions (8) of the wall bearing (4) that, in the mounted state, penetrate into the internal recess (7), preferably **in that** the respective clamping portion (18, 19) runs at an angle, in particular obliquely, with respect to the fastening portion (16).

14. Fastening arrangement according to any of the preceding claims, **characterized in that** a further clamping portion (20) extends from the fastening portion (16) of the wall bearing (4), said further clamping portion coming into contact with the fixing screw (14) during mounting and, when the fixing screw (14) is adjusted radially inwards, exerting a radial force on the hollow body wall (5b) via the fixing screw (14), and/or, in the clamped state, in which the hollow body (5) is axially clamped between the wall bearing (4) and the wall (3), said further clamping portion exerting an axial clamping force on the hollow body (5), in particular on the axial hollow body wall portion between the internal recess (7) and the axial open end of the hollow body (5), via the fixing screw (14), preferably **in that** the further clamping portion (20) runs at an angle, in particular obliquely, with respect to the fastening portion (16).

15. Fastening arrangement according to any of the preceding claims, **characterized in that** the wall bearing (4) has a substantially dish-like configuration.

16. Fastening arrangement according to any of the preceding claims, **characterized in that** there are at least two, preferably exactly two, peripheral portions (8) of the wall bearing (4) that, in the mounted state, penetrate into the internal recess (7), and/or **in that** the hollow body (5), in the mounted state, is held in a form-fitting and force-fitting manner via three points (a, b, c).

17. Fastening arrangement according to any of the preceding claims, **characterized in that** the wall bearing (4) and/or the hollow body (5) are/is in each case a one-piece body, in particular a metal body.

18. Fastening arrangement according to any of the preceding claims, **characterized in that** the hollow body (5), in particular the axial end portion (5a) of the hollow body (5), said axial end portion forming the closed axial end of said hollow body, is configured in one piece with the bathroom accessory (2), or the bathroom accessory (2) is secured to the hollow body (5), in particular to the axial end portion (5a) of the hollow body (5), said axial end portion forming the closed axial end of said hollow body, in a form-fitting, force-fitting and/or materially-bonded manner.

19. Hollow body, in particular a hollow cylinder, for fastening a bathroom accessory (2) to a wall (3) by means of a wall bearing (4), in particular by employing a fastening arrangement (1) according to any of the preceding claims, wherein the hollow body (5) has a geometric centre axis (6) and is in particular axially closed on one side,
**characterized**
**in that** the hollow body (5) has a hollow body wall (5b), which encircles the geometric centre axis (6), is radially machined by turning on the inside and outside, and has an internal recess (7), into which, in the mounted state, at least one peripheral portion (8) of the wall bearing (4) can radially penetrate.

## Revendications

1. Agencement de fixation pour la fixation d'un accessoire de salle de bain (2) sur une paroi (3), l'agencement de fixation (1) présentant un palier de paroi (4) et un corps creux (5), notamment un cylindre creux, pouvant être serré au moyen du palier de paroi (4), notamment fermé axialement d'un côté, avec un axe central géométrique (6), qui entoure radialement le palier de paroi (4) à l'état monté,
**caractérisé en ce que**
le corps creux (5) présente une paroi de corps creux (5b) usinée en rotation radialement sur le côté intérieur et extérieur, s'étendant autour de l'axe central géométrique (6), avec une entaille intérieure (7) dans laquelle plonge radialement, à l'état monté, au moins une section périphérique (8) du palier de paroi (4).

2. Agencement de fixation selon la revendication 1, **caractérisé en ce qu'**à l'état monté, l'au moins une section périphérique (8) du palier de paroi (4) s'appuie respectivement sur une surface d'appui (9) et/ou une arête d'appui (10) circonférentielle formée par l'entaille intérieure (7).

3. Agencement de fixation selon la revendication 1 ou 2, **caractérisé en ce que** la surface d'appui circonférentielle (9) formée par l'entaille intérieure (7) pour l'au moins une section périphérique (8) du palier de paroi (4) a un tracé oblique, de préférence **en ce que** la surface d'appui (9) est formée par une paroi latérale de l'entaille intérieure (7).

4. Agencement de fixation selon l'une quelconque des revendications précédentes, **caractérisé en ce que** l'arête d'appui circonférentielle (10) formée par l'entaille intérieure (7) est une arête, notamment une arête vive ou arrondie, entre une section s'étendant axialement (11) de la surface intérieure radiale de la paroi de corps creux (5b) et une surface circonférentielle (12) formée par l'entaille intérieur (7), s'étendant angulairement par rapport à celle-ci, notamment en oblique, de préférence **en ce que** la surface circonférentielle (12) formée par l'entaille intérieure (7) est formée par une paroi latérale de l'entaille intérieure (7).

5. Agencement de fixation selon l'une quelconque des revendications précédentes, **caractérisé en ce qu'**une section s'étendant axialement (11) de la surface intérieure radiale de la paroi de corps creux (5b) s'étend axialement dans la direction de l'extrémité axiale ouverte du corps creux (5) jusqu'à l'entaille intérieure (7), notamment jusqu'à la surface d'appui (9) et/ou à l'arête d'appui (10), de préférence **en ce que** la section s'étendant axialement (11) de la surface intérieure radiale de la paroi de corps creux (5b) présente une surface plane.

6. Agencement de fixation selon l'une quelconque des revendications précédentes, **caractérisé en ce que** l'entaille intérieure (7) présente une surface de base radiale (13) et la surface de base (13), à l'état monté, est espacée radialement de l'au moins une section périphérique (8) du palier de paroi (4), et/ou **en ce que** la surface intérieure axiale de la section d'extrémité axiale (5a) du corps creux (5) formant l'extrémité axiale fermée du corps creux (5) est, à l'état monté, espacée axialement de l'au moins une section périphérique (8) du palier de paroi (4).

7. Agencement de fixation selon l'une quelconque des revendications précédentes, **caractérisé en ce que** la forme du palier de paroi (4), notamment de l'au moins une section périphérique (8), et la forme du corps creux (5), notamment le tracé de la surface intérieure radiale de la paroi de corps creux (5b), sont adaptées l'une à l'autre de telle sorte qu'au cours du montage, le corps creux (5) peut être déplacé par rapport au palier de paroi (4) dans une première direction de montage (X), notamment dans la direction axiale, et/ou dans une deuxième direction de montage (Y) angulaire par rapport à la direction axiale, notamment oblique.

8. Agencement de fixation selon l'une quelconque des revendications précédentes, **caractérisé en ce que** la forme du palier de paroi (4), notamment de l'au moins une section périphérique (8), et la forme du corps creux (5), notamment le tracé de la surface intérieure radiale de la paroi de corps creux (5b), sont adaptées l'une à l'autre de telle sorte qu'au cours du montage, le corps creux (5) peut être emboîté dans la première direction de montage (X), notamment dans la direction axiale, sur le palier de paroi (4) et peut ainsi être amené dans un état d'emboîtement dans lequel le corps creux (5) est relié de manière lâche au palier de paroi (4), et/ou **en ce qu'**au cours du montage, le corps creux (5) peut être déplacé par rapport au palier de paroi (4) dans la deuxième direction de montage (Y) angulaire par rapport à la direction axiale, notamment oblique et peut ainsi être amené dans un état de serrage dans lequel le corps creux (5) est serré axialement entre le palier de paroi (4) et la paroi.

9. Agencement de fixation selon l'une quelconque des revendications précédentes, **caractérisé en ce qu'**à l'état de serrage dans lequel le corps creux (5) est serré axialement entre le palier de paroi (4) et la paroi (3), une force de serrage axiale est exercée par l'au moins une section périphérique (8) sur le corps creux (5), notamment la section de paroi de corps creux axiale entre l'entaille intérieure (7) et l'extrémité ouverte axiale du corps creux (5).

10. Agencement de fixation selon l'une quelconque des revendications précédentes, **caractérisé en ce qu'**une vis de fixation (14) réglable dans la direction radiale est agencée dans la paroi de corps creux (5b), par le déplacement de laquelle le corps creux (5) peut être amené de l'état d'emboîtement à l'état de serrage radialement vers l'intérieur.

11. Agencement de fixation selon l'une quelconque des revendications précédentes, **caractérisé en ce que** la surface extérieure s'étendant axialement de la paroi de corps creux (5b) s'étend axialement au-delà de l'entaille intérieure (7) dans la direction de l'extrémité axiale ouverte du corps creux (5), de préférence **en ce que** la surface extérieure s'étendant axialement de la paroi de corps creux (5b) présente une surface pourvue de rainures (15), de préférence encore **en ce que** les rainures (15) s'étendent chacune dans un plan orthogonal à l'axe central géométrique (6).

12. Agencement de fixation selon l'une quelconque des revendications précédentes, **caractérisé en ce que** le palier de paroi (4) présente une section de fixation (30) qui, à l'état monté, vient en appui contre la paroi (3), de préférence **en ce que** la section de fixation (16) présente un ou plusieurs trous (17) pour le passage d'un élément de fixation, notamment d'une vis, de préférence encore **en ce qu'**un ou plusieurs trous (17) dans la section de fixation (16) sont des trous oblongs.

13. Agencement de fixation selon l'une quelconque des revendications précédentes, **caractérisé en ce qu'**au moins une section de serrage (18, 19) s'étend à partir de la section de fixation (16) du palier de paroi (4), laquelle forme respectivement la ou une des sections périphériques (8) du palier de paroi (4) qui, à l'état monté, plongent dans l'entaille intérieure (7), de préférence **en ce que** la section de serrage respective (18, 19) s'étend angulairement, notamment en oblique, par rapport à la section de fixation (16).

14. Agencement de fixation selon l'une quelconque des revendications précédentes, **caractérisé en ce qu'**une autre section de serrage (20) s'étend à partir de la section de fixation (16) du palier de paroi (4), qui vient en contact avec la vis de fixation (14) au cours du montage et qui, lors du déplacement de la vis de fixation (14) radialement vers l'intérieur, exerce une force radiale sur la paroi de corps creux (5b) par l'intermédiaire de la vis de fixation (14) et/ou qui, à l'état de serrage, dans lequel le corps creux (5) est serré axialement entre le palier de paroi (4) et la paroi (3), exerce, par l'intermédiaire de la vis de fixation (14), une force de serrage axiale sur le corps creux (5), notamment sur la section de paroi de corps creux axiale entre l'entaille intérieure (7) et l'extrémité ouverte axiale du corps creux (5), de préférence **en ce que** l'autre section de serrage (20) s'étend angulairement, notamment en oblique, par rapport à la section de fixation (16).

15. Agencement de fixation selon l'une quelconque des revendications précédentes, **caractérisé en ce que** le palier de paroi (4) est conçu essentiellement en forme de cuvette.

16. Agencement de fixation selon l'une quelconque des revendications précédentes, **caractérisé en ce qu'**il est prévu au moins deux, de préférence exactement deux, sections périphériques (8) du palier de paroi (4) qui, à l'état monté, plongent dans l'entaille intérieure (7), et/ou **en ce que** le corps creux (5) est maintenu à l'état monté en trois endroits (a, b, c) par complémentarité de forme et par adhérence.

17. Agencement de fixation selon l'une quelconque des revendications précédentes, **caractérisé en ce que** le palier de paroi (4) et/ou le corps creux (5) sont chacun un corps d'un seul tenant, notamment un corps métallique.

18. Agencement de fixation selon l'une quelconque des revendications précédentes, **caractérisé en ce que** le corps creux (5), notamment la section d'extrémité axiale (5a) du corps creux (5) formant son extrémité axiale fermée est conçu d'un seul tenant avec l'accessoire de salle de bain (2) ou l'accessoire de salle de bain (2) est fixé sur le corps creux (5), notamment sur la section d'extrémité axiale (5a) du corps creux (5) formant son extrémité axiale fermée, par complémentarité de forme, par adhérence et/ou par liaison de matière.

19. Corps creux, notamment cylindre creux, pour la fixation d'un accessoire de salle de bain (2) sur une paroi (3) au moyen d'un palier de paroi (4), notamment en utilisant un agencement de fixation (1) selon l'une quelconque des revendications précédentes, le corps creux (5) présentant un axe central géométrique (6) et étant notamment fermé axialement d'un côté,
**caractérisé en ce que**
le corps creux (5) présente une paroi de corps creux (5b) usinée en rotation radialement sur le côté intérieur et extérieur, s'étendant autour de l'axe central géométrique (6), avec une entaille intérieure (7) dans laquelle, à l'état monté, au moins une section périphérique (8) du palier de paroi (4) peut plonger radialement.
